# EUROPEAN PATENT APPLICATION

(11) **EP 2 848 874 A1**
(43) Date of publication of application: **18.03.2015**
(21) Application number: 14184368.0
(22) Date of filing: 11.09.2014
(51) Int. Cl.: F24H 1/20, F24H 9/00, F28D 1/047, F28D 7/02, F28D 20/00, F28D 1/02

(54) **Water heating apparatus**

(30) Priority: 13.09.2013 MY PI2013701659
(71) Applicant: O.Y.L. Research & Development Centre Sdn Bhd, 47000 Sungai Buloh, Selangor Darul Ehsan (MY)
(72) Inventor: Hong Hong, Poh, 47000 Selangor (MY); Anuar Abd Aziz, Mohd, 47000 Selangor (MY)
(74) Representative: HGF Limited

(57) **Abstract**

Apparatus for water heating comprises a container (1) and an inner partition (6) wherein the inner partition allows a heating means to be configured in the form of coaxial coils wherein a first coil is disposed inside the inner partition and a second coil is encircled the exterior of the inner partition. The container (1) includes a drainage port (7) disposed at the bottom centre of the container to allow water to be drained out. The inner partition is provided inside the container to improve heat exchanging process and thermal stratification between hot and cold water in the container.

## Description

### Field of the Invention

The present invention relates to an apparatus for water heating. More particularly it relates to an apparatus for water heating with an inner partition.

### Background of the Invention

An apparatus for heating and storing water typically comprises of a container or tank for storing water and a heating means for heating up the water. The heating means includes, but not limited to electric heaters and heat exchangers. For condenser heat reclaim system of an air-conditioner, the condenser acts as a heat exchanger for heating water.

When hot water is used from the tank, cold water will be supplied into the tank to replace the amount of water that has drawn out of the tank. The mixture of hot and cold water in the tank may affect the preferred temperature of hot water in the tank.

Tanks for hot water may have different configurations. For instance, US2009/0272373 discloses a hot water tank with a movable inner partition that divides the tank into two compartments. The division allows hot water to be kept in a first compartment and cold water in a second compartment. Sealing means is provided at the inner partition to prevent hot and cold water from mixing together.

The present invention is intended to provide an apparatus for water heating that is configured with a functional inner partition for improving heat exchanging process and thermal stratification between hot and cold water in the container or tank.

### Summary of the Invention

According to the present invention, an apparatus for water heating comprises a container or tank for holding water, a heating means, and an inner partition. The inner partition is arranged inside the container substantially in a vertical position along the central axis of the container. The inner partition is provided to improve heat exchanging process and thermal stratification between hot and cold water in the container. Improving heat exchanging process means increasing heat capacity transferred to the water in which it will effectively reduce lead time of water heating in the container. The inner partition also increases the flow velocity of water across the heating means. Providing the inner partition according to the present invention, allows the heating means to be configured with a first coil and a second coil that can be arranged coaxially between each other wherein the first coil sits inside the interior of the inner partition and the second coil encircles the exterior of the inner partition. The inner partition is in the form of a funnel-like shape having a wider circular mouth tapering to a narrower tube. The tapering forms a conical portion of the mouth wherein the conical portion includes an annular slanting surface that converges towards the tube's opening. The tube is in the form of an elongated vertical hollow body. A plurality of openings are provided on the slanting surface of the conical portion to allow water to mix and circulate between the upper compartment and lower comportment of the container, and thus improving natural convection of water in the container. The edge of the circular mouth conforms to the interior contour of the container. Preferably, the edge is raised upwardly to form a wall with an appropriate height around the circular mouth. The exterior surfaces of the inner partition form a passageway to allow water to flow.

The container further comprises an inlet pipe entering the top of the container and an outlet pipe exiting from the bottom of the container. The inlet pipe is disposed below the mouth of the inner partition and bended downwardly to direct the water to the bottom of the container to allow the water to flow from the tube upwardly to the mouth of the inner partition. The arrangement of the heating means on the inner partition together with the flow direction will reduce cold flow bypass of the water in the container. The outlet pipe includes a bended pipe portion raised upwardly so to allow the water drawn from the container is with highest possible temperature and homogeneous heat distribution. The container further includes a drainage port disposed at the bottom centre of the container to allow water to be drained out wherein the position of the tube's opening is in line with the drainage port. The openings on the conical portion and the position of drainage port ensure that no residual water is trapped in the tank when water is drain out of the container, for instance, during servicing.

### Brief Description of the Drawings

The present invention will be further described by way of example with reference to the accompanying drawings, in which:
Fig. 1 shows a section view of an assembly view of an apparatus for water heating according to the present invention.
Fig. 2 shows water flow direction in a container shown in Fig. 1.
Fig. 3a shows the inner partition without openings on its annular slanting surface.
Fig. 3b shows the inner partition with openings on its annular slanting surface.
Fig. 3c shows an arrangement of openings on the annular slanting surface of the inner partition.
Fig. 3d shows another arrangement of openings on the annular slanting surface of the inner partition.
Fig. 4 shows the angle between the slanting surface and the tube from a side view.

### Detailed Description of the Preferred Embodiments

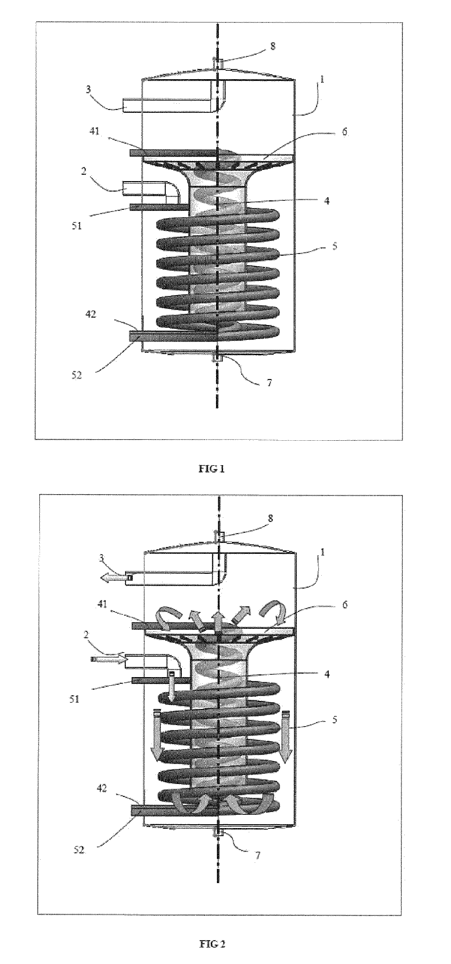

Fig. 1 shows a section view of an assembly of an apparatus for water heating according to an embodiment of the present invention. The apparatus comprises a container (1) for holding water, a heating means having a first coil (4) and a second coil (5), an inner partition (6), a drainage port (7) and a release valve port (8). The drainage port (7) is disposed at the bottom centre of the container (1) and the release valve port (8) is disposed at the top of the container. The container (1) comprises an inlet pipe (2) and an outlet pipe (3) to allow water to enter to and exit from the container respectively. The inlet pipe (2) enters at the top of the container and located under the circular mouth of the inner partition to allow water to flow downwardly across the second coil (5) and then upwardly across the first coil (4). The outlet pipe (3) exits from the top of the container and located above the inlet pipe (2) and the circular mouth of the inner partition wherein the outlet pipe (3) include a bended pipe portion raised upwardly to allow water with higher temperature to flow out of the tank by entering the bended pipe portion. The inner partition (6) is in the form of a funnel-like shape having a wider circular mouth tapering to a narrower tube which forms a conical portion of the mouth wherein the conical portion includes an annular slanting surface that converges towards the tube's opening. The edge of the circular mouth conforms to the interior contour or surface of the container. The edge is raised upwardly with an appropriate height to form a wall around the circular mouth. The apparatus for water heating according to the present invention is suitable for use with a condensate heat reclaim circuit

The first coil (4) may be connected to the second coil (5) to act as a single heating unit. As shown in Fig. 1, the first coil (4) is separated from the second coil (5) providing first and second independent heating means. The coils can be connected to more than one condenser heat reclaim circuit of air-conditioner. The first coil is disposed inside the tube of the inner partition with its inlet (41) entering the container at the top and its outlet (42) exiting from the container at the bottom. The first coil (4) extends through the inner partition in coil form. The second coil (5) encircles the exterior of the tube of the inner partition forming a coil with its inlet (51) entering to the container at the top but lower than the position of the inlet (41) of the first coil (4) and exiting from the container at the bottom. The coils can be, but not limited to be pipes that can conduct liquid such as refrigerant.

Preferably, opening are provided on the slanting surface of the circular mouth to allow water separated by the circular mouth to circulate in a quick manner and thus improving natural convection of water in the container.

Fig. 2 shows water flow direction in the container shown in Fig. 1. The container inlet pipe (2) is bended downwardly to allow water to flow downwardly filling up the bottom of the container (1) before flowing upwardly through the tube to enter the mouth area in which the water will firstly need to flow across the second coil (5) and then to the first coil (4). This arrangement reduces cold flow bypass across the coils' surface.

The arrangement of the first and second coils provide heating element that can work together or independently. For example, the second coil (5) can be connected to a heat pump water heating circuit and the first coil (4) can be connected to a solar heating system. If either one of the systems is inoperative or idle, water can still be heated up by either one of the systems. In another example, the first and second coils are connected to a heat pump water heating circuit or condenser heat reclaim circuit of an air-conditioning unit, water can still be heated up if either of the circuits is inoperative or idle. The use of first and second coils provides flexibility in choosing variety of heat sources for heating the water.

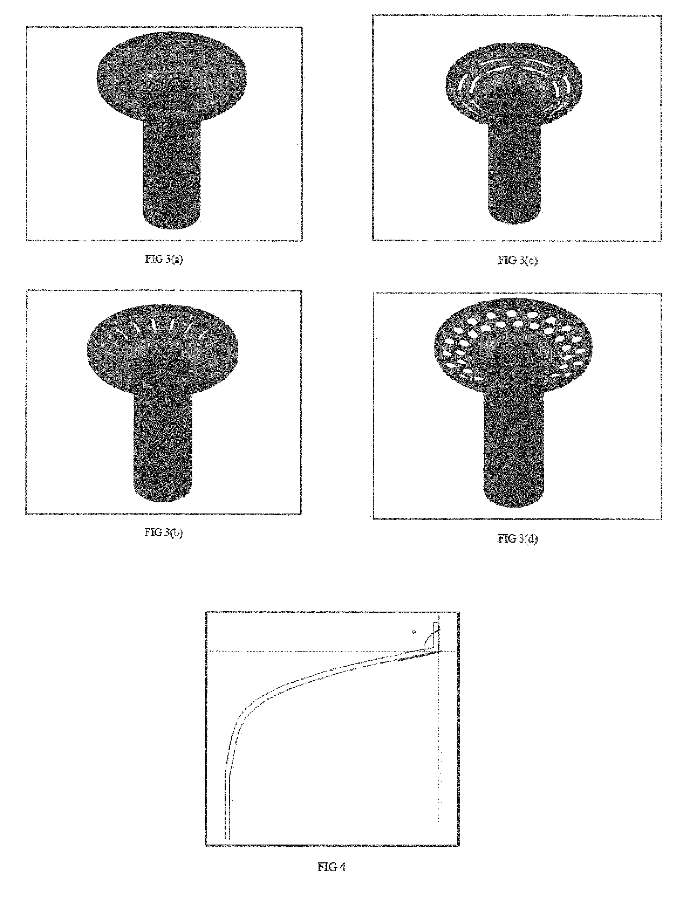

The annular slanting surface of the circular mouth of the inner partition (6) can be provided with or without openings. Fig. 3a shows an inner partition (6) without openings and Fig. 3b shows an inner partition (6) with plurality of openings arranged in adjacent spaced relationship. The openings will promote water flow in the container due to buoyancy force during supply valve close condition and hence improve heat exchanging process throughout the tank. Fig. 3c shows an arrangement of openings on an inner partition and Fig. 3d shows another arrangement of openings on an inner partition.

Fig. 4 shows the angle of a section of the inner partition wherein the tapering from the wider circular mouth to the narrower tube provide a conical section of the mouth with annular slanting surface. The edge comprises a raised rim forming a circular wall around the mouth. Preferably, the angle of the slanting surface is more than 90 degree measured from a vertical axis of the edge in anti-clockwise direction. The slanting surface of the circular mouth ensures no residual water trapped in the water tank when water is drained out via the drainage port.

## Claims

1. An apparatus for water heating comprising
a container (1);
an inner partition (6) disposed inside the container;
**characterized in that** the inner partition (6) includes a wider circular mouth tapering to a narrower tube forming a conical portion,
wherein the inner partition allows a heating means to have a first coil (4) to sit inside the tube and a second coil (5) to encircle the tube of the inner partition.

2. An apparatus for water heating according to claim 1, wherein the inner partition is in the form of a funnel-like shape.

3. An apparatus for water heating according to claim 1, wherein the conical portion includes an annular slanting interior surface that converges toward the tube's opening and optionally wherein the slanting surface comprises a plurality of openings to allow water to mix.

4. An apparatus for water heating according to claim 1, wherein the circular mouth comprises an edge that conforms to an interior contour of the container (1); and optionally wherein the edge includes a wall that protrudes upwardly with an appropriate height from the edge.

5. An apparatus for water heating according to claim 3, wherein the slanting surface is slanted at an angle greater than 90 degree measured from a vertical axis of the wall in anti-clockwise direction.

6. An apparatus for water heating according to claim 1, wherein the container (1) further comprises an inlet pipe (2) entering at the top of the container and located under the circular mouth of the inner partition to allow water to flow downwardly across the second coil (5) and then upwardly across the first coil (4); and optionally wherein the container (1) further comprises an outlet pipe (3) exiting from the top of the container and located above the inlet pipe (2) and the circular mouth of the inner partition wherein the outlet pipe (3) include a bended pipe portion raised upwardly to allow water with higher temperature to flow out of the tank by entering the bended pipe portion.

7. An apparatus for water heating according to claim 1, wherein the first coil (4) includes a pipe entering at the top of the container as an inlet (41) and exiting from the bottom of the container as an outlet (42); and optionally wherein the second coil (5) encircles the exterior of the tube of the inner partition.

8. An apparatus for water heating according to claim 1, wherein the second coil (5) includes a pipe (51) entering the top of the container and an outlet (52) exiting from the bottom of the container (1) as an outlet (2); and optionally wherein the first coil (4) is connected to the second coil forming a heat exchanger unit.

9. An apparatus for water heating according to claim 1, wherein the first coil (4) is connected to a heating system to and the second coil (5) is connected to another heating system to act as independent heat exchangers; and optionally wherein either one of the coils is connected to a condenser heat reclaim circuit of an air-conditioner.

10. An apparatus for water heating according to claim 1, wherein the coils are separately connected to different condenser heat reclaim circuits of air-conditioners; and optionally wherein either one of the coils is connected to a heat pump water heating circuit.

11. An apparatus for water heating according to claim 1, wherein either one of the coils is connected to a solar heating system; and optionally wherein the container (1) further comprises a drainage port (7) disposed at the bottom center of the container (1) and a release valve port (8) disposed at the top of the container (1).

12. An inner partition for a container of a water heating apparatus comprising
a wider circular mouth tapering to a narrower tube
wherein the inner partition allows a heat exchanger of the container to have
a first coil (4) to be inside the tube and a second coil (5) to encircle the tube.

13. An inner partition according to Claim 12, wherein the tapering of the mouth to the tube forms a conical portion of the mouth having an annular slanting interior surface that converges towards the tube's opening; and optionally wherein the slanting surface is slanted at an angle greater than 90 degree measured from a vertical axis of the wall in anti-clockwise direction.

14. An inner partition according to Claim 12, wherein the circular mouth comprises an edge that conforms to an interior contour of the container (1); and optionally wherein the edge includes a wall that protrudes upwardly from the edge.

15. An inner partition according to Claim 12, wherein the slanting surface comprises a plurality of openings.
